# EUROPÄISCHE PATENTSCHRIFT

(11) **EP 0 672 694 B1**
(45) Veröffentlichungstag und Bekanntmachung des Hinweises auf die Patenterteilung: **28.01.1998**
(21) Anmeldenummer: 95103165.7
(22) Anmeldetag: 06.03.1995
(51) Int. Cl.: C08G 18/08, C08G 18/50, C08G 18/32, C08K 5/103, C08J 9/00

(54) **Verfahren zur Herstellung von gegebenenfalls zellförmigen Polyurethanen**
Process for the preparation of optionally cellular polyurethanes
Procédé de préparation de polyuréthanes éventuellement cellulaires

(30) Priorität: 17.03.1994 DE 4409043
(43) Veröffentlichungstag der Anmeldung: 20.09.1995
(73) Patentinhaber: BAYER AG, 51368 Leverkusen (DE)
(72) Erfinder: von Bonin, Wulf, Dr., D-51519 Odenthal (DE); Müller, Hanns-Peter, Dr., D-51519 Odenthal (DE); Kapps, Manfred, Dr., D-51467 Bergisch Gladbach (DE)

(56) Entgegenhaltungen:
- EP-A- 0 009 755
- EP-A- 0 017 948
- FR-A- 2 135 266
- FR-E- 79 116

## Beschreibung

Für die Verwendung natürlicher, z.B. nachwachsender Rohstoffe für industrielle Zwecke, also auch für Zwecke der Polyurethanchemie, besteht bekanntlich ein zunehmendes Interesse.

Wie die EP-A 0 563 682 (S. 2; Z. 20) im Zusammenhang mit Weichschäumen beschreibt, ist der Einsatz von Fetten und Ölen als Weichmacher in Schaumstoffen grundsätzlich bekannt.

So beschreibt schon DE-PS 1 113 810 die Kombination von Rizinusöl und basischen Polyolen bei der Herstellung von Polyurethanschaumstoffen. Hierbei fungiert das Rinzinusöl als eine Polyhydroxylverbindung und wird chemisch in das PU-Gerüst eingebaut (wie auch die mitzuverwendenden Polyole), d.h. ein Teil der Polyolkomponenten der Schaumstoffrezeptur wird durch das natürliche Öl substituiert.

Im vergleichbarem Sinne beschreibt die US-PS 2 955 091 Polyurethan-Schaumstoffe auf Basis einer Kombination aus Fettsäureglyceriden mit OH-Zahlen nicht unter 100, wobei Castoröl genannt wird, und Propylenglykolpolyethern mit Molekulargewichten um 1000.

Gemäß EP-A 0 563 682 wird Speisemargarine in Kombination mit Polyetherpolyolen, deren OH-Zahlen zwischen 14 und 50 liegen. zur Tixotropierung und zusätzlichen Aktivierung von Weichschaum-Reaktionsgemischen verwendet. wobei die durch langkettige Polyether ausgezeichneten Reaktionsgemische bis zu 30 Gew.-% der Margarine enthalten können, ohne daß eine Verschlechterung der Schaumstoffeigenschaften beobachtet wird. Wahrscheinlich besteht eine recht gute Verträglichkeit der Margarinefette mit den langen. relativ hydrophoben Polypropylenetherketten der Weichschaumpolyole. so daß keine Verschlechterung der Produkteigenschaften resultiert.

Es ist andererseits aus der DE-OS 4 303 556 auch bekannt, PU-Schaumstoffe aus Gemischen von hydroxylierten Estern natürlicher Fettsäuren und hydroxylierten, bzw. funktionalisierten oligomeren Kohlenwasserstoffen herzustellen, und aus der DE-OS 4 315 841 sind analoge Schaumstoffe bekannt, bei denen anstelle der funktionalisierten Kohlenwasserstoffe auch nicht funktionalisierte Polyolefine eingesetzt werden können. In diesem letzteren Falle fungieren die hydroxylierten Fettsäureester als verträglich machender "Emulgator" für die Polyolefine.

In beiden Fällen jedoch ist die Mitverwendung erheblicher Anteile der nur chemisch aufwendig herzustellenden funktionalisierten Fettsäureester erforderlich.

Die Herstellung solcher funktionalisierter Fettsäureester ist z.B. in Fat. Sci. Technol. Bd. 95, Nr. 3; S. 91 ff. beschrieben.

Es wurde nach einem Verfahren gesucht, bei dem auch nichtfunktionelle, bzw. nicht funktionalisierte Fettsäureester und Kohlenwasserstoffe bzw. Polyolefinoligomere, insbesonders auch nichtfunktionelle natürliche, nachwachsende Öle, wie sie direkt aus den Ölfrüchten extrahierbar sind, ohne Zuhilfenahme der speziell funktionalisierten Fettsäureester oder OH-funktioneller, zumeist teurer natürlicher Öle, zu PU-Schaumstoffen verarbeitet werden können.

Es wurde nunmehr überraschenderweise festgestellt. daß sich dann große Mengen, d.h. etwa 30-60 Gew.-% eines PU-Schaumstoffs aus quasi nichtfunktionellen z.B. natürlichen Fettsäureestern, etwa Rapsöl oder Speiseöl aufbauen lassen, wenn man diese mit relativ geringen Mengen von Fettsäuresalzen basischer Polyole, insbesonders basischer Polyetherpolyole kombiniert und mit Polyisocyanaten, sowie in der Schaumstoffchemie üblichen Stabilisatoren, gegebenenfalls Wasser und sonstigen Hilfsmitteln in prinzipiell bekannter Weise zur Umsetzung bringt.

Die neuen, erfindungsgemäß nichtfunktionelle Komponenten enthaltenden Reaktionsgemische sind zumeist dünnflüssig und in ihrer Hydrophilie, bzw. Hydrophobie gerade so beschaffen. daß einerseits direkt verträgliche Gemische von Salzen und nichtfunktionellen Komponenten und den Polyisocyanaten entstehen können, andererseits durch den hohen Anteil wenig polarer Komponenten hoch hydrophobe aber wenig weichgemachte PU-Werkstoffe erzeugt werden können; eine als überraschend zu bezeichnende Eigenschaftskombination.

Weiterhin war es überraschend, daß sich die nichtfunktionellen Fettsäureester, die immerhin über eine gewisse Polarität verfügen, auch ganz oder teilweise durch Kohlenwasserstoffe, bzw. oligomere Polyolefine substituieren lassen.

Schließlich war es überraschend, daß auch relativ kurzkettige basische Polyole, bzw. Polyetherpolyole, hierfür geeignet sind und daß die Anwesenheit langer hydrophober Polypropylenglykoletherketten mit Molekulargewichten um 1000 und höher nicht erforderlich ist, um einen Einbau des nichtfunktionellen Öls zu erreichen.

Ferner war es auch überraschend, daß die neuartigen Schaumstoffe trotz ihres hohen Gehaltes an dünnflüssigem Öl mehr den Charakter von nicht klebenden Hartschäumen als den von Weichschäumen haben. Andererseits können gegebenenfalls auch Schaumstoffe mit Weichschaumcharakter erzeugt werden.

Es ist ein weiterer technischer Vorteil der neuen Schaumstoffe, daß dann, wenn die verwendeten Öle lufthärtende Gruppierungen enthalten, wie sie bekanntermaßen in der Lackindustrie Verwendung finden, gegebenenfalls bei Mitverwendung von Sikkativen, Produkte erhalten werden können. bei denen die eingelagerten Öle noch durch eine Luftreaktion chemisch vernetzbar sind.

Gegenstand der Erfindung ist ein Verfahren zur Herstellung von gegebenenfalls zellförmigen Polyurethanen durch Umsetzung von
a) Polyisocyanaten mit
b) Gemischen aus α) Salzen von Fettsäuren mit basischen Polyolen und β) nichtfunktionellen Fettsäureestern und/oder Kohlenwasserstoffen und gegebenenfalls
c) mindestens zwei gegenüber Isocyanaten aktive Wasserstoffatome aufweisenden Verbindungen vom Molekulargewicht 62 bis 399 sowie gegebenenfalls
d) mindestens zwei gegenüber Isocyanaten aktive Wasserstoffatome aufweisenden Verbindungen vom Molekulargewicht 400 bis 10.000, gegebenenfalls in Gegenwart von
e) an sich bekannten Treibmitteln, Katalysatoren und weiteren Hilfs- und Zusatzmitteln.
   Erfindungsgemäß ist bevorzugt, daß
   als nichtfunktionelle Fettsäureester natürliche Fettsäureglyceride verwendet werden,
   als basische Polyole solche einer OH-Zahl größer 50, insbesondere einer OH-Zahl größer 400 verwendet werden,
   als basische Polyole Polyalkylenglykolpolyether verwendet werden,
   als Fettsäuren Monocarbonsäuren mit mehr als 9 C-Atomen verwendet werden,
   als nichtfunktionelle Kohlenwasserstoffe solche mit Siedepunkten über 200°C und Schmelzpunkten unter 100°C verwendet werden und
   als nichtfunktionelle Kohlenwasserstoffe Polyolefine verwendet werden.

Die Erfindung betrifft auch die Polyurethanschaumstoffe die nach dem erfindungsgemäßen Verfahren erhältlich sind.

Im folgenden werden die für das erfindungsgemäße Verfahren verwendeten Komponenten näher erläutert:

Als Polyisocyanat a) kommen im Prinzip beliebige, vorzugsweise jedoch bei Raumtemperatur flüssige aliphatische, cycloaliphatische, araliphatische, aromatische und heterocyclische Polyisocyanate in Betracht, wie sie z.B. von W. Sietken in Justus Liebigs Annalen der Chemie, 562, Seiten 75 bis 136, beschrieben werden, beispielsweise solcher Formel

Q(NCO)ₙ,

in der
- n: 2 bis 4, vorzugsweise 2 und 3, und
- Q: einen aliphatischen Kohlenwasserstoffrest mit 2 bis 18, vorzugsweise 6 bis 10 C-Atomen, einen cycloaliphatischen Kohlenwasserstoffrest mit 4 bis 15, vorzugsweise 5 bis 10 C-Atomen, einen aromatischen Kohlenwasserstoffrest mit 6 bis 15, vorzugsweise 6 bis 13 C-Atomen oder einen araliphatischen Kohlenwasserstoffrest mit 8 bis 15, vorzugsweise 8 bis 13 C-Atomen bedeuten,
z.B. solche Polyisocyanate, wie sie in der DE-OS 2 832 253, Seiten 10 bis 11, beschrieben werden.

Vorzugsweise werden aromatische Polyisocyanate eingesetzt.

Besonders bevorzugt werden in der Regel die technisch leicht zugänglichen Polyisocyanate, z.B. das 2,4- und 2.6-Toluylendiisocyanat sowie beliebige Gemische dieser Isomeren ("TDI"), Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisende Polyisocyanate ("modifiziertes Polyisocyanat"). insbesondere solche modifizierten Polyisocyanate, die sich vom 2,4- und/oder 2,6-Toluylendiisocyanat bzw. vom 4,4'-und/oder 2,4'-Diphenylmethandiisocyanat ableiten.

Die Polyisocyanate werden in, bezogen auf die im Reaktionsgemisch enthaltenen OH-Gruppen, 60-150 %iger, vorzugsweise 80-120 %iger stöchiometrischer Menge eingesetzt.

Zur Komponente b): Als Fettsäuren zur Salzbildung werden vorzugsweise Carbonsäuren mit mehr als 9 C-Atomen verwendet.

Die zur Salzbildung mit den basischen Polyethern verwendeten Fettsäuren und Fettsäuregemische sind vorwiegend gesättigte und/oder ungesättigte Monocarbonsäuren mit mehr als 9 C-Atomen. Es kommen jedoch auch Di- und Polycarbonsäuren in Betracht, z.B. die durch Oligomerisierung erhältlichen sogenannten Dimer- und Trimersäuren der Fettchemie.

Die Carbonsäuren können synthetischen Ursprungs sein, wie z.B. solche die durch Umsetzung von Aminen oder Alkoholen mit Di- oder Polycarbonsäuren oder Verseifung von Amiden, Nitrilen, (Poly)Estern oder durch Oxydation oder Ozonabbau von gegebenenfalls ungesättigte Baugruppen enthaltenden Polyolefinen, z.B. Butylkautschuken oder von Fettalkoholen zugänglich sind, sie sind jedoch vorzugsweise natürlichen Ursprungs und vielfach Fettsäuregemische, wie z.B. Ölsäure, Elaidinsäure, Stearin-, Isostearinsäure, Tallölfettsäure, Kokosfettsäure, Abietinsäure und sonstige Harzsäuren, Linolsäure, Linolensäure, Erukasäure, Rapsölfettsäure, Fischölfettsäuren, Talkfettsäuren, Rizinusölfettsäuren, Montanwachsfettsäuren, Schieferölfettsäuren, usw.

Vorzugsweise werden solche Fettsäuren bzw. Fettsäuregemische, ganz, teilweise oder vorzugsweise nicht gehärtet, verwendet, die bei Raumtemperatur flüssig sind.

Fettsäuren mit Schmelzpunkten unter 50°C werden in Bezug auf die basischen Polyole in 30 bis 150 %iger. vorzugsweise 80-120 %iger stöchiometrischer Menge eingesetzt.

Fettsäuren mit Schmelzpunkten über 50°C z.B. Stearinsäure verhalten sich überraschenderweise eher wie nichtfunktionelle Kohlenwasserstoff-Wachse und können in Mengen wie diese eingesetzt werden.

Als basische Polyole (vorzugsweise Polyalkylenglykolpolyether) werden ein und mehr Aminogruppen enthaltende Polyole (bzw. Polyether) mit OH-Zahlen über 50, insbesonders über 400 verwendet, vorzugsweise solche, die Polyethylenoxyd-und/oder Polypropylenoxyd basierte Polyethergruppierungen enthalten.

Die zur Salzbildung eingesetzten basischen Polyole. bzw. Polyalkylenglykolpolyether oder Polyalkylenglykolpolyethergemische enthalten mindestens eine, vorzugsweise 1-7, insbesondere 1-4 Aminogruppen in der und/oder am Ende der Molekülkette.

Als basische Polyole werden Alkanolamine in Betracht gezogen, die wie Mono-, Di- oder Triethanol-, bzw. -propanolamin oder Tetrapropoxyethylendiamin, mindestens eine Alkanolgruppierung am Stickstoff tragen. Bevorzugt werden jedoch als Gerüstsubstanz, basische Polyalkylenglykolpolyether, hierbei insbesonders solche, die mindestens eine, mindestens zweigliedrige Polyetherkette am Aminstickstoff tragen. Ihre OH-Zahl beträgt mindestens 50, vorzugsweise ist sie 150 und mehr, insbesonders liegt sie über 400.

Solche Polyether werden üblicherweise technisch durch Alkoxylierung von primären oder sekundären, aliphatischen, araliphatischen. cyclischen, heterocyclischen oder aromatischen Aminen, vorzugsweise von Ammoniak und/oder Propylendi-Amin, vorzugsweise Ethylendiamin und/oder Polyalkylenpolyaminen oder deren Gemischen hergestellt.

Zur Alkoxylierung werden im allgemeinen Alkylenoxyde, vorzugsweise Ethylenoxyd und/oder insbesonders Propylenoxyd verwendet. Die Salzbildung mit den Fettsäuren erfolgt durch einfaches Vermischen der Komponenten, vorzugsweise bei 5-50°C.

Der Anteil der Fettsäuresalze der basischen Polyole am mit den Polyisocyanaten zur Reaktion zu bringenden Reaktionsgemisch beträgt in der Regel 10-80, vorzugsweise 20-65 Gew.-%.

Als nichtfunktionelle Fettsäureester dienen neben synthetischen Fettsäureestern vorzugsweise nichtfunktionelle natürliche Fettsäureglyceride, insbesondere solche, die bei Raumtemperatur flüssig sind.

Als nichtfunktionelle Kohlenwasserstoffe, bzw. Polyolefine dienen vorzugsweise bei Raumtemperatur flüssige bzw. unter 100°C schmelzende Fraktionen und Oligomerisate aus der Kohle- und Petrochemie, insbesonders solche mit Siedepunkten über 200°C.

Als im erfindungsgemäßen Sinne nichtfunktionelle Komponenten des Reaktionsgemisches dienen vorzugsweise solche mit Siedepunkten über 200°C und Schmelzpunkten unter 100°C. Das können z.B. Fraktionen aus der Erdölraffination, der Kohleveredelung oder aus Recyclingprozessen sein, z.B. Paraffinöle, Paraffinwachse, Spindelöle, Leicht- und Schweröle mit gesättigtem oder ungesättigtem, aliphatischem, araliphatischem, cyclischem oder aromatischem Charakter.

Es kann sich aber auch um durch Polymerisation oder Oligomerisation bzw. Telomerisation ungesättigter Grundkomponenten, etwa Ethylen, Propylen, Buten, Isobuten, Isobutylen, Butadien, Penten, Octen bzw. deren Gemischen zugängliche Öle handeln, wobei flüssige Oligomere des Isobutylens bevorzugt zu nennen sind, weil sie einen besonders günstigen Einfluß auf die Hydrophobie und Gasundurchlässigkeit der Verfahrensprodukte haben.

Von besonderem Interesse sind als nichtfunktionelle Komponenten im erfindungsgemäßen Sinne synthetische, insbesonders jedoch natürliche, tierische und vor allem pflanzliche Öle und Wachse, die zumeist gemischte gesättigte und ungesättigte Fettsäureester in Form von Glyceriden enthalten und als solche oder im Gemisch miteinander oder mit den vorgenannten nichtfunktionellen Komponenten zum Einsatz kommen können, wie etwa Speiseöle der verschiedensten Herkunft, Tallöle, Rapsöle, Nußöle, Leinöle, Wurzelöle und sonstige Extraktionsöle.

Die nichtfunktionellen Komponenten sind in der mit den Polyisocyanaten zur Umsetzung zu bringenden Reaktionsmischung in Mengen von 85-20, vorzugsweise 70-50 Gew.-% enthalten. Hierbei ergänzen sich jeweils die Prozentzahlen zusammen mit den für die Fettsäuresalze zu 100.

Komponente c): Gegebenenfalls sind weitere Ausgangskomponenten Verbindungen mit mindestens zwei gegenüber Isocyanaten reaktionsfähigen Wasserstoffatomen und einem Molekulargewicht von 32 bis 399. Auch in diesem Fall versteht man hierunter Hydroxylgruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf. Beispiele hierfür werden in der DE-OS 2 832 253, Seiten 19-20, beschrieben.

Die Komponente d) umfaßt Verbindungen mit mindestens zwei gegenüber Isocyanaten reaktionsfähigen Wasserstoffatomen von einem Molekulargewicht in der Regel von 400-10.000. Hierunter versteht man neben Aminogruppen, Thiogruppen oder Carboxylgruppen aufweisende Verbindungen, vorzugsweise Hydroxylgruppen aufweisende Verbindungen, insbesondere 2 bis 8 Hydroxylgruppen aufweisende Verbindungen, speziell solche vom Molekulargewicht 1000 bis 6000, vorzugsweise 2000 bis 6000, z.B. mindestens 2, in der Regel 2 bis 8, vorzugsweise aber 2 bis 6, Hydroxylgruppen aufweisende Polyether und Polyester sowie Polycarbonate und Polyesteramide, wie sie für die Herstellung von homogenen und von zellförmigen Polyurethanen an sich bekannt sind und wie sie z.B. in der DE-OS 2 832 253, Seiten 11-18, beschrieben werden.

Komponente e): Gegebenenfalls werden an sich bekannte Treibmittel wie Wasser oder leichtflüchtige Kohlenwasserstoffe wie Butan, Pentan, Cyclopentan, Hexan, Dimethylether oder Hexafluorbutan mitverwendet. Ferner werden gegebenenfalls Hilfs- und Zusatzmittel mitverwendet wie
- Katalysatoren der an sich bekannten Art in Mengen von bis zu 10 Gew.-%, bezogen auf die Komponente b),
- oberflächenaktive Zusatzstoffe, wie Emulgatoren und Schaumstabilisatoren,
- Reaktionsverzögerer, z.B. sauer reagierende Stoffe wie Salzsäure oder organische Säurehalogenide, ferner Zellregler der an sich bekannten Art wie Paraffine oder Fettalkohole oder Dimethylpolysiloxane sowie Pigmente oder Farbstoffe und weitere Flammschutzmittel der an sich bekannten Art, z.B. Trikresylphosphat, Blähgraphit, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß- oder Schlämmkreide.

Diese gegebenenfalls mitzuverwendenden Hilfs- und Zusatzstoffe werden beispielsweise in der DE-OS 2 732 292, Seiten 21-24, beschrieben.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl Hanser Verlag, Münschen 1966, z.B. auf den Seiten 103-113, beschrieben.

Durchführung des Verfahrens zur Herstellung von Polyurethankunststoffen: Die Reaktionskomponenten werden nach dem an sich bekannten Einstufenverfahren. dem Prepolymerverfahren oder dem Semiprepolymerverfahren zur Umsetzung gebracht, wobei man sich oft maschineller Einreichtungen bedient, z.B. solcher, die in der US-PS 2 764 565 beschrieben werden. Einzelheiten über Verarbeitungseinrichtungen (Diskonti- und Kontiverfahren), die auch erfindungsgemäß in Frage kommen, werden im Kunststoff-Handbuch. Band VII, herausgegeben von Vieweg und Höchtlen, Carl-Hanser-Verlag, München 1966, z.B. auf den Seiten 121-205, beschrieben. Selbstverständlich können auch die Schaumstoffe durch Blockverschäumung oder nach dem an sich bekannten Doppeltransportbandverfahren hergestellt werden.

Die erfindungsgemäße zugänglichen neuen Schaumstoffe basieren naturgemäß weitgehend auf vorteilhaft preiswerten, technisch leicht zugänglichen Polyolefinen, Paraffinen, Paraffinwachsen, bzw. vorwiegend natürlich nachwachsenden Gerüstrohstoffen, zu denen erfindungsgemäß auch die zu verwendenden Fettsäuren zu zählen sind. Sie haben vorwiegend Hartschaumcharakter. Je nach der Art der erfindungsgemäß einzusetzenden nichtfunktionellen Komponenten und deren Einsatzmenge sind sie geschlossen- oder offenporig, hydrophob und z.T. wenig gasdurchlässig und wenig wasseraufnehmend oder infolge poröser Zellwände, wasserdurchlässig. Vielfach zeichnen sie sich durch besonders gute Entformbarkeit aus. Sie finden Verwendung zum Herstellen von Formteilen, zur Schallisolierung, zum Ausfüllen von Hohlräumen, als thermisches und elektrisches Isoliermaterial, als Verpackungsmaterial mit guter Stoßenergieaufnahmefähigkeit, zur Herstellung von Sandwichkonstruktionen, als Konstruktionsmaterial, bzw. zur Herstellung sogenannter Integralschaumformkörper. In zerkleinerter oder offenporiger oder extrahierter Form können sie auch für Absorptionszwecke oder als Filtermaterial verwendet werden.

Die neuen Schaumstoffe können auch mit organischen und/oder anorganischen Füllstoffen sowie Verstärkungsfasern versehen sein.

Oftmals ist überraschenderweise jedoch die Mitverwendung von Katalysatoren nicht erforderlich, weil möglicherweise die Fettsäuresalze eine trotz der relativ großen Anteile verdünnender, nicht reaktiver Komponenten ausreichend gute Aktivierung bewirken.

Weiterhin ist die Mitverwendung von die Lufttrocknung trocknender Öle beschleunigender Sikkative, sie aus der Lackchemie bekannt sind, in Betracht zu ziehen, ebenso die Mitverwendung von Zersetzungsstabilisatoren und Konservieungsmitteln, um den athmosphärischen oder biologischen Angrift auf die Schaumstoffe einzuschränken, aber auch die Mitverwendung von Flammschutzmitteln, Aromastoffen, farbgebenden Zusätzen. inneren Trennmitteln, Füllstoffen und Verstärkungsfasern.

Im folgenden wird der Gegenstand der Erfindung beispielhaft erläutert. Die angegebenen Teile und Prozente beziehen sich auf das Gewicht, soweit nichts anderes vermerkt ist.

Es wurden folgende Ausgangsmaterialien verwendet:

### Fettsäuren:

- FA:: Handelsübliche Ölsäure der Fa. Henkel, Düsseldorf
- FB:: Handelsübliche Abietinsäure
- FC:: Handelsübliche Sojaölfettsäure
- FD:: Handelsübliche Tallölfettsäure
- FE:: Durch Ozonosierung von handelsüblichem Butylkautschuk in Methylenchlorid erhältliche Isobutylen-Oligomer-Carbonsäure mit einer Säurezahl von 17
- FF:: Handelsübliches Kokosölfettsäuregemisch
- FG:: Handelsübliche sogen. Dimerfettsäure (Fa. Unichem)

### Basische Polyole:

- BA:: Diethanolamin
- BB:: Triethanolamin
- BC:: Propoxylierungsprodukt von Triethanolamin mit einer OH-Zahl von 500
- BD:: Propoxylierungsprodukt von Ethylendiamin mit einer OH-Zahl von 155
- BE:: Wie BD, aber OH-Zahl 480
- BF:: Wie BD, aber OH-Zahl 60
- BG:: Umsetzungsprodukt von Triethanolamin mit gleichen Teilen Ethylen- und Propylenoxyd, OH-Zahl 505

### Nichtfunktionelle Öle

- NA:: Handelsübliches Speiseöl (Fa. Brölio, Handelsges.. Hamm)
- NB:: Handelsübliches Polyisobutylenoligomerisat (Oppanol® B3. BASF, Ludwigshafen)
- NC:: Handelsübliches Spindelöl
- ND:: Handelsübliches Rapsöl
- NW:: Handelsübliches Paraffinwachs: Schmelzpunkt ca. 60°C

### Beispiel 1

20 Tle FA werden mit 40 Tlen NA und 16,4 Tlen BE zu einer klaren Lösung vermischt. Dann werden noch 1,3 Tle eines handelsüblichen Stabilisators (PU 1836, Bayer AG) und 1 Tl Wasser hinzugefügt.

Dieses Gemisch wird ca. 10 Sek. intensiv mit 25 Tlen eines handelsüblichen MDI-Polyisocyanates (Desmodur® 44 V 20, Bayer AG) verrührt, in eine Kastenform gegossen und dort zum Aufschäumen gebracht.

Man erhält einen feinporigen, homogen wirkenden Hartschaum, der ein Raumgewicht (RG) von ca. 60 g/l aufweist und nicht klebrig ist.

### Beispiel 2

Es wird gemäß Beispiel 1 gearbeitet, jedoch wird die Menge an NA verdoppelt und die Isocyanatmenge auf 31,5 Tle erhöht. Man erhält einen feinporigen halbhart wirkenden, nicht klebenden Schaum mit einem RG von ca. 50.

Die Beispiele 1 und 2 zeigen die Aufnahmefähigkeit des erfindungsgemäßen Polyurethanmaterials für nichtfunktionelle Öle. Solche Schaumstoffe eignen sich für Stoßabsorptionszwecke, sowie als Isolationsmaterial.

### Beispiel 3

48 Tle FA und 100 Tle NA, sowie 45.8 Tle BC; 5 Tle BB; 4,6 Tle Wasser und 2,6 Tle des in Beispiel 1 verwendeten Stabilisators werden bei Raumtemperatur gut vermischt.

Man erhält eine dünnflüssige, schwach trübe, homogene Mischung, die über 70 % an nachwachsenden Rohstoffen enthält. Sie wird anschließend in einer Düsenmischkopfanlage intensiv mit 133,6 Tlen des in Beispiel 1 verwendeten Polyisocyanats vermischt und in eine Kastenform eingebracht. In dieser schäumt das Material zu einem Block mit einer Rohdichte von ca. 45 g/l auf.

Der Schaum ist homogen-feinporig, hart-zäh, fühlt sich trocken und nicht klebend an. Er weist feinporöse Zellwände auf. Derartige Schaumstoffe eignen sich als Isolations- und Filtermaterialien und zur Herstellung von Sandwichkernlagen. Führt man den Aufschäumprozess in einer geschlossenen Form durch, werden leicht entformbare Formkörper mit verdichteter Randzone erhalten.

### Beispiel 4

45 Tle Abietinsäure werden bei 80°C in 100 Tlen NA und 50 Tlen BC gelöst. Dann wird auf Raumtemperatur abgekühlt und mit 5 Tlen BB und mit 5 Tlen Wasser sowie 3 Tlen eines handelsüblichen Stabilisators auf Polyetherpolysiloxanbasis (Stabilisator OS 20) vermischt. Man erhält eine dünnflüssige homogene Lösung, die intensiv mit einem technischen MDI (Desmodur® 44V 10; Bayer AG) vermischt und in eine Becherform gegeben wird. Hier schäumt das Reaktionsgemisch zu einem feinporigen, homogenen, zäh-harten Hartschaum mit einem Raumgewicht von ca. 50 g/l auf.

### Beispiel 5

Wie Beispiel 3, jedoch wird anstelle des Öls NA jetzt in gleicher Gewichtsmenge eine Mischung aus gleichen Teilen ND und NC, bzw. aus NC und NA verwendet. In beiden Fällen erhält man einen zäh-harten Hartschaum mit dem Beispiel 3 vergleichbarem Erscheinungsbild.

### Beispiel 6

In Beispiel 3 wird die Komponente NA durch ND in gleicher Menge ersetzt. Man erhält einen Rapsöl-Hartschaum mit vergleichbaren Eigenschaften.

### Beispiel 7

20 Tle BE, 30 Tle FA und 1 Tl BA und 1 Tl BB werden mit 45 Tln NB und 3 Tlen Stabilisator aus Beispiel 1, sowie 0,5 Tln Zinnoctoat, 0,5 Tln Wasser und 5 Tln Cyclopentan zu einem homogenen, dünnflüssigen Gemisch verrührt. Dieses wird gleich anschließend 10 Sek. intensiv mit 32 Tlen MDI-Polyisocyanat aus Beispiel 1 verrührt und in eine Kastenform gegeben. In dieser schäumt die Reaktionsmischung zu einem feinporigen harten Schaumstoff auf, der ein RG von ca. 70 g/l aufweist.

### Beispiel 8

Es wird gemäß Beispiel 1 gearbeitet. Anstelle von FA werden jedoch gleiche Mengen von jeweils FC, bzw. FD, bzw. FF, bzw. FG eingesetzt. In allen drei Fällen werden Schaumstoffe mit dem Beispiel 1 vergleichbaren Eigenschaften erhalten.

### Beispiel 9

Es wird analog Beispiel 2 gearbeitet. Anstelle von 20 Tln FA werden jetzt jedoch 100 Tle FE, bzw. 150 Tle FE im Gemisch mit 112 Tln FD eingesetzt. Man erhält jeweils einen störungsfreien Schaumstoff mit einem Raumgewicht von ca. 60 g/l. Derartige Schaumstoffe sind als stoßabsorbierende Verpackungsschaumstoffe einsetzbar.

### Beispiel 10

20 Tle FA werden mit 13,1 Tln BF; 50 Tln NA, sowie 11 Tln Glycerin; 5 Tln Wasser; 1,5 Tln Stabilisator aus Beispiel 1 und (als zusätzlichem Aktivator) 2 Tle Dimethylbenzylamin und anschließend 152 Tle Polyisocyanat aus Beispiel 1 intensiv verrührt. Das Reaktionsgemisch wird in eine Kastenform gegeben und schäumt dort zu einem zähen, feinporigen. Hartschaum mit einem Raumgewicht von ca. 55 g/l auf. Der Schaum ist nicht klebend und gut für Verpackungszwecke geeignet.

### Beispiel 11

24 Tle FD; 20 Tle NB; 20 Tle NC; 20 Tle ND; 50 Tle BD; 6,4 Tle BB. 1,4 Tle Stabilisator aus Beispiel 1 und 2 Tle Wasser werden zu einer dünnflüssigen homogenen Mischung verrührt und dann intensiv mit 62 Tln Polyisocyanat aus Beispiel 1 gemischt. Das Reaktionsgemisch wird in eine Becherform gegeben und bildet dort einen homogenen, feinporigen zäh-harten Schaum mit einem Raumgewicht von ca. 60 g/l.
Der Schaum ist trocken und nicht klebend. er wird als Sandwichinnenlange verwendet.

### Beispiel 12

50 Tle FE; 100 Tle NA; 50 Tle NB und 56 Tle BC werden mit 5 Tln Wasser und 3 Tln eines handelsüblichen Schaumstabilisators auf Siliconbasis, sowie 10 Tln Cyclopentan zu einer schwach trüben homogen wirkenden Phase verrührt und durch intensives Vermischen mit 136 Tln techn. MDI (Desmodur® 44 V 20; Bayer AG) zur Reaktion gebracht. Das Reaktionsgemisch schäumt in einer Kastenform zu einem harten, homogenporigen Schaumstoff auf, der ein RG von ca. 40 g/l aufweist und als stoßabsorbierender Verpackungsschaum von Interesse ist.

### Beispiel 13

34 Tle FA; 20 Tle NA; 30 Tle BC werden gemischt und unter intensiver Homogenisierung mit 38 Tln MDI (vgl. Beispiel 12) zur Reaktion gebracht. Man läßt in einer Plattenform ausreagieren und erhält eine klebfreie, hart-flexible massiv wirkende Platte mit einem RG von ca. 0,9 g/cm³.

### Beispiel 14

Wie vorgängiges Beispiel, nur wird anstelle von BC ein Gemisch aus 50 Tln BF und 5,7 Tln Butandiol eingesetzt. Man erhält eine flexible, schwach zellige Platte mit einem RG von ca. 0,8 g/cm³.

Derartige, massiv wirkende Verfahrensprodukte werden zur Herstellung von Formkörpern. Vergüssen und Beschichtungen verwendet.

### Beispiel 15

Es wird eine Mischung hergestellt aus 65 Tln eines auf Trimethylolpropan gestarteten Polypropylenglykolpolyethers mit einer OH-Zahl von 35; 15 Tln BB; 30 Tln FC; 60 Tln leichtem Heizöl und 60 Tln NC. Hinzugesetzt werden noch 3 Tle Wasser und 1 T1 handelsüblicher Stabilisator gemäß Beispiel 1, sowie 5 Tle Baumwollfasern.

Die so erhaltene gießfähige Mischung wird mit 50 Tln MDI gemäß Beispiel 1 intensiv verrührt und in einer Kastenform zur Ausreaktion gebracht. Man erhält einen störungsfreien, nicht klebenden Schaumstoff mit einem Raumgewicht von 60 g/l. Derartige Schaumstoffmaterialien sind, z.B. auf textilen Unterlagen hergestellt, zum Reinigen verschmutzter Maschinenteile geeignet.

### Beispiel 16

Man stellt eine schmalzartige homogenisierte Mischung her aus 15 Tln FA; 5 Tln FF; 10 Tln FG; 18 Tln BB; 20 Tln Polyol gemäß Beispiel 15; 80 Tln NB; 4,5 Tln Wasser und 1 Tl Stabilisator gemäß Beispiel 1. In einem Rührwerkmischkopf werden 153 Tle dieser Mischung pro Zeiteinheit (1 Sek.) intensiv mit 85 Tln MDI gemäß Beispiel 1 vermischt und in eine Kastenform ausgetragen. In dieser treibt das Reaktionsgemisch zu einem feinporigen, homogenen Schaumstoff mit einem Raumgewicht von ca. 30 g/l auf. Der Schaum ist nach 30 Sek. klebfrei und hat halbharten Charakter. Derartige Schäume sind für Verpackungszwecke geeignet.

### Beispiel 17

48 Tle FA; 250 Tle NB; 46 Tle BC, sowie 5 Tle BB; 25 Tle Cyclopentan; 11,6 Tle Wasser und 5 Tle handelsüblicher Stabilisator auf Basis eines Polyetherpolysiloxans werden intensiv vermischt und danach mit 183 Tln eines technischen MDI-Typs (Desmodur® 44 V 10; Bayer AG) intensiv 6 Sek. lang verrührt. Dann wird in eine Kastenform eingegossen, in der der Aufschäumprozess abläuft. Nach ca. 65 Sek. ist der Aufschäumprozess beendet und der gebildete Schaum fest und klebfrei. Er ist weitgehend geschlossenporig, feinporig, mit homogenem Zellbild, hat ein RG von ca. 28 g/l, keine Kernverfärbung und Hartschaumcharakter.

Derartige Schaumstoffe sind zur Herstellung von Doppelband-Isolierplatten mit Papierdeckschichten, zur Sandwichherstellung, zur Herstellung von Formteilen und Stoßabsorptionsm aterialien geeignet.

### Beispiel 18

Die Arbeitsweise ist wie im Beispiel 17, nur wird anstelle von 250 Tln NB jetzt ein Gemisch aus 83 Tln NB und 167 Tln NA verwendet. Der erhaltene Schaum entspricht in seinen wesentlichen Merkmalen dem nach Beispiel 17 erhaltenen Typ.

### Beispiel 19

Die Arbeitsweise ist wie im Beispiel 17, nur wird jetzt anstelle von 250 Tln NB ein Gemisch aus 83 Tln NB, 85 Tln Schweineschmalz und 85 Tln Kokosfett in aufgeschmolzener Form (40°C) eingesetzt. Der erhaltene Schaumstoff entspricht dem in Beispiel 18 erhaltenen Typ.

Die Schaumstoffe gemäß Beispielen 2; 3; 19 zerfallen in zerkleinerter Form in einer Kompostierung innerhalb von 6 Monaten.

### Beispiel 20

20 Tle FA, 200 Tle NB, 25 Tle BB sowie 20 Tle Cyclopentan, 4,6 Tle Wasser und 3 Tle Stabilisator aus Beispiel 1 werden gut vermischt und dann intensiv mit dem in Beispiel 1 verwendeten Polyisocyanat (134 Tle) ca. 10 Sekunden lang verrührt. Dann gießt man das Reaktionsgemisch in eine Kastenform aus. In dieser schäumt es zu einem nahezu klebfreien Hartschaum mit einem Raumgewicht von ca. 70 g/l auf. Derartige Schaumstoffe sind für Verpackungs- und Stoßabsorptionszwecke einsetzbar.

In dieser Rezeptur kann die Komponente NB z.B. durch gleiche Gewichtsmengen der Komponenten NA oder NC ersetzt werden.

Das resultierende Schaumstoffmaterial besteht dann -abgesehen von der Isocyanatkomponente - nahezu ausschließlich aus nachwachsenden Rohstoffen.

### Beispiel 21

10 Tle FA, 10 Tle FED, 40 Tle Rinzinolsäure, 25 Tle BB, 200 Tle NB, 50 Tle Rizinusöl, 40 Tle Cyclopentan sowie 11 Tle Wasser und 3 Tle des Stabilisators aus Beispiel 4 werden mit einem schnell laufenden Rührwerk gut vermischt und dann weiter mit 220 Tlen des Polyisocyanats aus Beispiel 1 intensiv vermischt. Nach ca. 10 Sek. wird das Reaktionsgemisch in eine Kastenform entleert, in der es zu einem trocknen, klebfreien Hartschaum mit einem Raumgemwicht von ca. 50 g/l aufgeschäumt. Derartige Schaumstoffe, die, wie auch in den vorherigen Beispielen, ohne Mitverwendung von aminischen oder metallischen Aktivatoren erhältlich sind, werden wie die aus Beispiel 20 verwendet.

### Beispiel 22

50 Tle FD, 20 Tle FE, 250 Tle NB, 6 Tle BB, 50 Tle BC, sowie 25 Tle Cyclopentan, 5,2 Tle Stabilisator gemäß Beispiel 1 und 11,6 Tle Wasser werden zu einer homogenen Mischung verrührt und dann mit 183 Tlen des in Beispiel 1 verwendeten MDI-Polyisocyanats intensiv vermischt. Nach ca. 10 Sek. wird das Gemisch in eine offene Kastenform eingebracht in der es aufschäumt. Man erhält einen nach 50 Min. klebfreien Hartschaum mit homogener, feiner Zellstruktur und einem Raumgewicht von ca. 20 g/l.

Bei koninuierlicher Fahrweise auf einer technik-üblichen Verschäumungsanlage mit Rührwerksmischkopf, wird ein noch um ca. 3 g/l niedrigeres Raumgewicht erhalten.

Derartige Schaumstoffe eignen sich für Verpackungs- und Isolationszwecke.

### Beispiel 23

50 Tle FA, 150 Tle NW, 50 Tle BC, 5 Tle BB, 3 Tle handelsüblicher Stabilisator auf Basis von Polyetherpolysiloxanen, 20 Tle Cyclopentan und 5 Tle Wasser werden in einem Druckbehälter bei ca. 60°C unter gutem Rühren als Schmelze gehalten. Diese Mischung dosiert man über einen Düsenmischkopf der PU-Technik zu 145 Tlen handelsüblichen MDI (Desmodur® 44 V 10; Bayer AG) in eine Plattenform. In dieser expandiert das gut vermischte Reaktionsgemisch zu einem feinporigen homogenen Hartschaum mit einem Raumgewicht von ca. 25 g/l.

Dieser ist stark hydrophob und findet für Isolationszwecke Verwendung, wo minimale Wasseraufnahme des Isolationsmaterials erforderlich ist.

### Beispiel 24

Wie Beispiel 23, jedoch wird anstelle von FA in gleicher Gewichtsmenge Stearinsäure verwendet.

Man erhält einen Schaum der dem aus Beispiel 23 vergleichbar ist. Er wird für die Herstellung von Sandwichkernen verwendet.

### Beispiel 25

Wie im Beispiel 23 werden unter gutem Rühren in der Schmelze vermischt: 50 Tle FA, 100 Tle Stearinsäure, 50 Tle BC, 5 Tle BB, 3 Tle des gleichen Stabilisators, 5 Tle Wasser und 20 Tle Cyclopentan.

Diese Mischung wird im Düsenmischkopf intensiv mit 145 Tlen des Polyisocyanats aus Beispiel 23 vermischt und in eine Kastenform ausgetragen, in der das Reaktionsgemisch zu einem sehr feinporigen zäh-harten Schaumstoff mit einem Raumgewicht von ca. 24 g/l aufschäumt. Dieser Schaum hat die Eigenschaft, bei mechanischer Beanspruchung vom harten in den weichen Schaumstoffcharakter überzugehen. Er ist stark hydrophob und für Verpackungszwecke geeignet, da er gute Stoßabsorptionseigenschaften hat.

### Beispiel 26

Es wird analog Beispiel 23 gearbeitet, jedoch unter Zusatz von 100 Tlen Wachs. 50 Tln Stearinsäure, 10 Tln Cyclopentan und 2 Tln des Stabilisators.

Man erhält in vergleichbarer Weise einen Hartschaum mit einem Raumgewicht von ca. 25 g/l und feinporiger Struktur. Dieser Schaumstoff besteht zu ca. 60 Gew.-% aus Wachs und Fettsäure. Er hat stark hydrophoben Charakter und eignet sich zum Füllen von Isolierwänden in Geräten verschiedenster Art, z.B. Kühlschränken.

## Patentansprüche

1. Verfahren zur Herstellung von gegebenenfalls zellförmigen Polyurethanen durch Umsetzung von
a) Polyisocyanaten mit
b) Gemischen aus α) Salzen von Fettsäuren mit basischen Polyolen und β) nichtfunktionellen Fettsäureestern und/oder Kohlenwasserstoffen und gegebenenfalls
c) mindestens zwei gegenüber Isocyanaten aktive Wasserstoffatome aufweisenden Verbindungen vom Molekulargewicht 62 bis 399 sowie gegebenenfalls
d) mindestens zwei gegenüber Isocyanaten aktive Wasserstoffatome aufweisenden Verbindungen vom Molekulargewicht 400 bis 10.000, gegebenenfalls in Gegenwart von
e) an sich bekannten Treibmitteln, Katalysatoren und weiteren Hilfs-und Zusatzmitteln.

2. Verfahren gemäß Anspruch 1, in dem als nichtfunktionelle Fettsäureester natürliche Fettsäureglyceride verwendet werden.

3. Verfahren gemäß Anspruch 1 und 2, in dem als basische Polyole solche einer OH-Zahl größer 50 verwendet werden.

4. Verfahren gemäß Anspruch 1 bis 3, in dem als basische Polyole solche einer OH-Zahl größer 400 verwendet werden.

5. Verfahren gemäß Anspruch 1 bis 4, in dem als basische Polyole Polyalkylenglykolpolyether verwendet werden.

6. Verfahren gemäß Anspruch 1 bis 5, in dem als Fettsäuren Monocarbonsäuren mit mehr als 9 C-Atomen verwendet werden.

7. Verfahren gemäß Anspruch 1 bis 6. in dem als nichtfunktionelle Kohlenwasserstoffe solche mit Siedepunkten über 200°C und Schmelzpunkten unter 100°C verwendet werden.

8. Verfahren gemäß Anspruch 1 bis 7. in dem als nichtfunktionelle Kohlenwasserstoffe Polyolefine verwendet werden.

9. Polyurethane, erhältlich nach dem Verfahren gemäß Ansprüchen 1 bis 8.

10. Polyurethanschaumstoffe, erhältlich nach dem Verfahren gemäß Ansprüchen 1 bis 8.

## Claims

1. A method of producing polyurethanes which are optionally cellular by the reaction of
a) polyisocyanates with
b) mixtures comprising α) salts of fatty acids with basic polyols and β) non-functional fatty acid esters and/or hydrocarbons, and optionally
c) compounds of molecular weight 62 to 399 having at least two hydrogen atoms which are active in relation to isocyanates, and optionally
d) compounds of molecular weight 400 to 10,000 having at least two hydrogen atoms which are active in relation to isocyanates, optionally in the presence of
e) foaming agents, catalysts and other process materials and additives known in the art.

2. A method according to claim 1, wherein natural fatty acid glycerides are used as the non-functional fatty acid esters.

3. A method according to claim 1 and 2, wherein polyols having an OH number greater than 50 are used as the basic polyols.

4. A method according to claims 1 to 3, wherein polyols having an OH number greater than 400 are used as the basic polyols.

5. A method according to claims 1 to 4, wherein polyalkylene glycol polyethers are used as the basic polyols.

6. A method according to claims 1 to 5, wherein monocarboxylic acids having more than 9 C atoms are used as the fatty acids.

7. A method according to claims 1 to 6, wherein hydrocarbons with boiling points above 200°C and melting points less than 100°C are used as the non-functional hydrocarbons.

8. A method according to claims 1 to 7, wherein polyolefines are used as the non-functional hydrocarbons.

9. Polyurethanes obtainable by the method according to claims 1 to 8.

10. Polyurethane foamed materials obtainable by the method according to claims 1 to 8.

## Revendications

1. Procédé pour la préparation de polyuréthannes éventuellement alvéolaires, par mise en réaction
a) de polyisocyanates avec
b) des mélanges constitués par α) des sels d'acides gras avec des polyols basiques et par β) des esters d'acides gras et/ou des hydrocarbures non fonctionnels, et éventuellement
c) des composés présentant au moins deux atomes d'hydrogène actifs vis-à-vis d'isocyanates, d'un poids moléculaire de 62 à 399, ainsi qu'éventuellement
d) des composés présentant au moins deux atomes d'hydrogène actifs vis-à-vis d'isocyanates, d'un poids moléculaire de 400 à 10.000, éventuellement en présence
e) d'agents moussants, de catalyseurs et d'autres adjuvants et additifs connus en soi.

2. Procédé selon la revendication 1, dans lequel on utilise, comme esters d'acides gras non fonctionnels, des glycérides d'acides gras naturels.

3. Procédé selon les revendications 1 et 2, dans lequel on utilise, comme polyols basiques, ceux dont l'indice OH est supérieur à 50.

4. Procédé selon les revendications 1 à 3, dans lequel on utilise, comme polyols basiques, ceux dont l'indice OH est supérieur à 400.

5. Procédé selon les revendications 1 à 4, dans lequel on utilise, comme polyols basiques, des polyéthers de polyalkylèneglycols.

6. Procédé selon les revendications 1 à 5, dans lequel on utilise, comme acides gras, des acides monocarboxyliques contenant plus de 9 atomes de carbone.

7. Procédé selon les revendications 1 à 6, dans lequel on utilise, comme hydrocarbures non fonctionnels, ceux dont les points d'ébullition sont supérieurs à 200°C et dont les points de fusion sont inférieurs à 100°C.

8. Procédé selon les revendications 1 à 7, dans lequel on utilise, comme hydrocarbures non fonctionnels, des polyoléfines.

9. Polyuréthannes que l'on obtient conformément au procédé selon les revendications 1 à 8.

10. Mousses de polyuréthanne que l'on obtient conformément au procédé selon les revendications 1 à 8.
